## Europäisches Patentamt
## European Patent Office
## Office européen des brevets

(19)

(11) Veröffentlichungsnummer: **0 071 817**
**B1**

(12) # EUROPÄISCHE PATENTSCHRIFT

(45) Veröffentlichungstag der Patentschrift:
25.09.85

(51) Int. Cl.⁴: **B 60 N 3/00**

(21) Anmeldenummer: **82106526.5**

(22) Anmeldetag: **20.07.82**

(54) Einrichtung zur schwenkbaren Anordnung einer Tischplatte an der Rückenlehne eines Fahrgastsitzes.

(30) Priorität: **01.08.81 DE 3130566**

(43) Veröffentlichungstag der Anmeldung:
**16.02.83 Patentblatt 83/7**

(45) Bekanntmachung des Hinweises auf die Patenterteilung:
**25.09.85 Patentblatt 85/39**

(84) Benannte Vertragsstaaten:
**DE FR GB IT SE**

(56) Entgegenhaltungen:
**DE - C - 898 860**
**FR - A - 1 209 207**
**FR - A - 2 002 957**
**GB - A - 515 558**
**US - A - 2 383 125**
**US - A - 2 619 395**
**US - A - 2 963 078**

(73) Patentinhaber: **BAYERISCHE MOTOREN WERKE Aktiengesellschaft, Postfach 40 02 40 Petuelring 130, D-8000 München 40 (DE)**

(72) Erfinder: **Jovanovic, Nenad, Gotzinger Strasse 10, D-8000 München 70 (DE)**

(74) Vertreter: **Dexheimer, Rolf, Bayerische Motoren Werke Aktiengesellschaft Postfach 40 02 40 Petuelring 130 - AJ-21, D-8000 München 40 (DE)**

## Beschreibung

Die Erfindung bezieht sich auf eine Einrichtung zur schwenkbaren Anordnung einer Tischplatte an der Rückenlehne eines Fahrgastsitzes, insbesondere eines Kraftfahrzeugsitzes.

Bei den Klapptischen, die in der Praxis verwendet werden, lässt sich die Neigung der in die horizontale Gebrauchslage geschwenkten Tischplatte in der Regel nicht oder nur umständlich verstellen. Eine solche Verstellung ist aber wünschenswert, weil einmal die Neigung der Tischplatte abhängt von der Stellung der Rückenlehne. Zum anderen kann je nach Gebrauchszweck der Tischplatte eine andere Neigung erforderlich sein.

Die US-A-2 619 395 zeigt einen Kraftfahrzeugsitz, an dessen Rückenlehne ein in Rede stehender Klapptisch angeordnet ist. Die Tischplatte weist hier im Bereich ihrer vorderen Kante feststehende Zapfen auf, die in Längsnuten einer in der Rückenlehne eingelassenen Öffnung geführt sind. Ausserdem weist die Tischplatte im Bereich der Zapfen Rastmittel auf, mit denen sie sich in ihrer Höhenlage festlegen lässt. Schliesslich ist im unteren Bereich der Öffnung eine ausziehbare Stützstrebe angelenkt, die die in Gebrauchslage geschwenkte Tischplatte stützt. Die Strebe selbst ist wiederum in verschiedenen Längen festlegbar.

Diese bekannte Konstruktion ist verhältnismässig aufwendig. Ausserdem lässt sich die Tischplatte nur mit einiger Übung in die gewünschte Gebrauchslage schwenken bzw. neigen. Denn zunächst einmal muss der Benützer die verstaute Tischplatte hochziehen und umklappen und sie in der gewünschten Höhenlage über die Rastmittel fixieren. Sodann muss er die Stützstrebe, die unterhalb der Tischplatte in der Öffnung durch eine Klemmspange gehalten ist, herausschwenken und in die für die gewünschte Neigung der Tischplatte richtigen Länge ausziehen, arretieren und in Stützstellung zur Tischplatte bringen. Dabei ist dem Fahrgast die Sicht durch die Tischplatte versperrt, so dass er den Einstellvorgang weitgehend tastend vornehmen muss, will er sich nicht übermässig verrenken.

Aufgabe der Erfindung ist es daher, eine gattungsgemässe Einrichtung soweit zu bilden, dass sie einfach aufgebaut ist und die Bedienung ohne Mühe folgen kann.

Die Aufgabe wird erfindungsgemäss mit den kennzeichnenden Merkmalen der beiden unabhängigen Ansprüche gelöst.

Weitere vorteilhafte Ausgestaltungen der Erfindung ergeben sich aus den Unteransprüchen.

Durch die erfindungsgemässe Einrichtung lässt sich die Tischplatte innerhalb eines weiten Bereichs in jeden beliebigen Neigungswinkel verstellen. Bei Kraftfahrzeugen werden normalerweise die Fahrzeugsitze nur auf Sonderwunsch mit Klapptischen ausgestattet. In diesem Fall ist es vorteilhaft, wenn die Einrichtung so ausgelegt ist, dass in einer formstabilen Blende, beispielsweise aus Kunststoff, die Tischplatte sitzt. Die Blende kann dann als Rückseite an der Rückenlehne befestigt werden, ohne dass der Fahrgastsitz in seiner Konstruktion geändert werden muss.

In seiner vorteilhaften Ausführung bildet die Tischplatte in ihrer verstauten Lage zusammen mit der Rückseite eine im wesentlichen einheitliche Fläche ohne vorstehende Kanten oder Ecken. Dadurch wird das Verletzungsrisiko des Fahrgastes bei einem Unfall herabgesetzt.

Weitere Vorteile der Erfindung ergeben sich aus der nachfolgenden Beschreibung zweier Ausführungsbeispiele und der dazugehörigen Zeichnung. Die Zeichnung zeigt in

— Fig. 1 die Rückenlehne eines Fahrgastsitzes mit verstauter Tischplatte,

— Fig. 2 einen Ausschnitt der Rückenlehne nach Fig. 1, die Tischplatte jedoch in Gebrauchslage geschwenkt,

— Fig. 3a,b eine Blende in Vorder- und Seitenansicht,

— Fig. 3c eine Schnittdarstellung nach der Schnittlinie III-III in Fig. 3b,

— Fig. 4a,b eine Sperrklinke in Vorder- und Seitenansicht, in vergrössertem Massstab,

— Fig. 5a,b eine Tischplatte in Vorder- und Seitenansicht,

— Fig. 6 ein zweites Ausführungsbeispiel der Erfindung,

— Fig. 7 eine Draufsicht nach Fig. 6 und

— Fig. 8 eine Einzelheit nach Fig. 6, in vergrössertem Massstab.

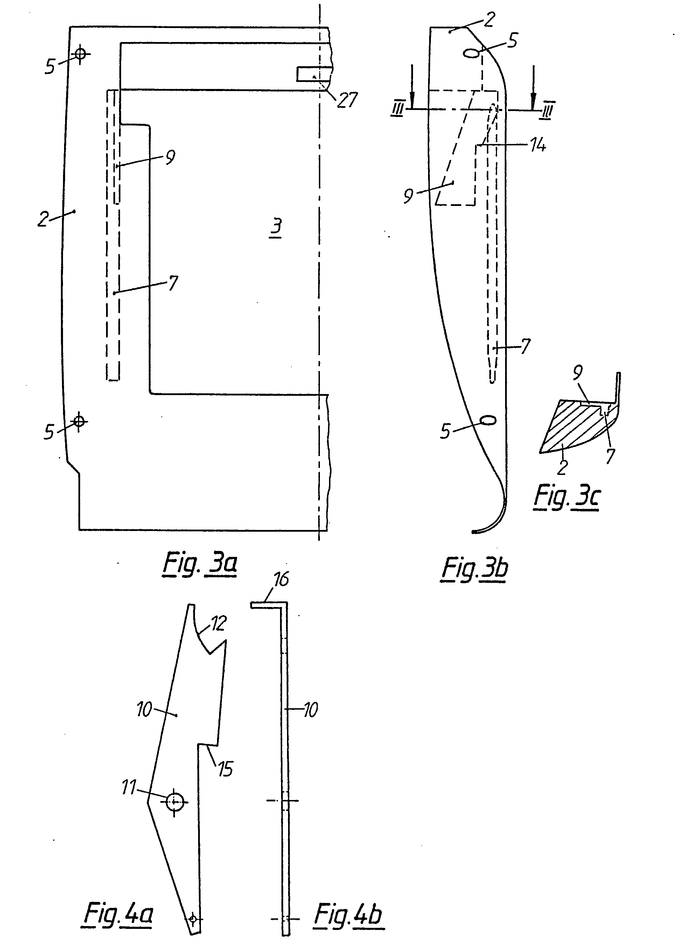

Eine Rückenlehne 1 einen nicht weiter dargestellten Fahrzeugsitzes eines Kraftfahrzeuges trägt eine formstabile Blende 2, die vorzugsweise aus Kunststoff hergestellt ist. Die Blende 2 weist eine Öffnung 3 (Fig. 3a) auf, in der eine Tischplatte 4 so eingesetzt ist, dass sie als Abdeckung der Öffnung 3 dient. Ferner ist die Blende 2 an der Rückenlehne festgeschraubt; die hierfür notwendigen Schraubenlöcher in der Blende sind aus den Fig. 3a und b erkennbar und dort mit 5 bezeichnet. Da die Tischplatte 4 oft als Schreib- und Leseunterlage verwendet wird, ist an der Blende 2 im oberen Bereich ihrer Öffnung 3 eine Leselampe 27 vorgesehen.

Die Tischplatte 4 lässt sich durch Hochziehen und Umklappen in eine horizontale Gebrauchslage schwenken. Zu diesem Zweck weist sie an ihren Längsseiten je ein Führungselement 6a, 6b auf, mit denen sie in Längsnuten 7 in der Blende 2 geführt ist. Die Längsnuten 7 sind in der Blende 2 beidseitig der Öffnung 3 angebracht und erstrecken sich in vertikaler Richtung im wesentlichen über die ganze Länge der Öffnung 3. Die Führungselemente 6a, b werden gebildet von den überstehenden Enden eines formstabilen Stabes 6, der sich über die ganze Länge einer Durchgangsbohrung 8 in der Tischplatte 4 erstreckt. Die Durchgangsbohrung 8 verläuft mit Abstand parallel zur vorderen Kante 4a der Tischplatte 4.

Als Vorderkante 4a ist die Kante bezeichnet, die bei umgeklappter Tischplatte 4 an der Rückenlehne 1 liegt.

Die Längsnuten 7 gehen in ihrem oberen Teil jeweils in eine Tasche 9 über, jede Tasche 9 nimmt eine Sperrklinke 10 auf. Die Sperrklinken 10 (Fig. 4a, b) sind als Doppelarmhebel ausgelegt und mit ihrem Mittelabschnitt 11 drehbar in der Tasche 9 gelagert. Der erste Hebelarm weist an seinem Ende einen maulförmigen Einschnitt 12 auf. Am Ende des zweiten Hebelarms greift eine Feder 13 an, die die Sperrklinke 10 in vorgespannter Stellung in der Tasche 9 hält. In der Tasche 9 ist ein Vorsprung 14 ausgebildet. Er dient als Anschlag für die Sperrklinke 10, die hierfür eine Innenschulter 15 aufweist.

Wird die Tischplatte 4 hochgezogen und umgeklappt, rasten ihre Führungselemente 6a, b in die maulförmigen Einschnitte 12 der Sperrklinken 10 ein. Die Tischplatte 4 ist dadurch festgelegt, sie kann nach unten nicht mehr wegrutschen. Darüber hinaus dienen die maulförmigen Einschnitte 12 als Lagerstellen für die drehbare Lagerung der Tischplatte 4 über die Führungselemente 6a, b.

Um die Tischplatte 4 von ihrer Gebrauchslage in ihre Ruhelage verstauen zu können, müssen die Sperrklinken 10 gelöst werden. Die Sperrklinken 10 weisen hierfür am Ende ihres ersten Hebelarmes, oberhalb des maulförmigen Einschnittes 12 eine Lasche 16 auf, die so abgebogen ist, dass sie bei umgeklappter Tischplatte 4 auf deren Oberfläche liegt. Beim Verstauen wird die Tischplatte 4 zunächst nach oben geschwenkt. Dadurch werden die Sperrklinken 10 über die Laschen 16 nach hinten gedreht, bis sie die Führungselemente 6a, b freigeben.

Sodann lässt sich die Tischplatte 4 in ihre Ruhelage absenken.

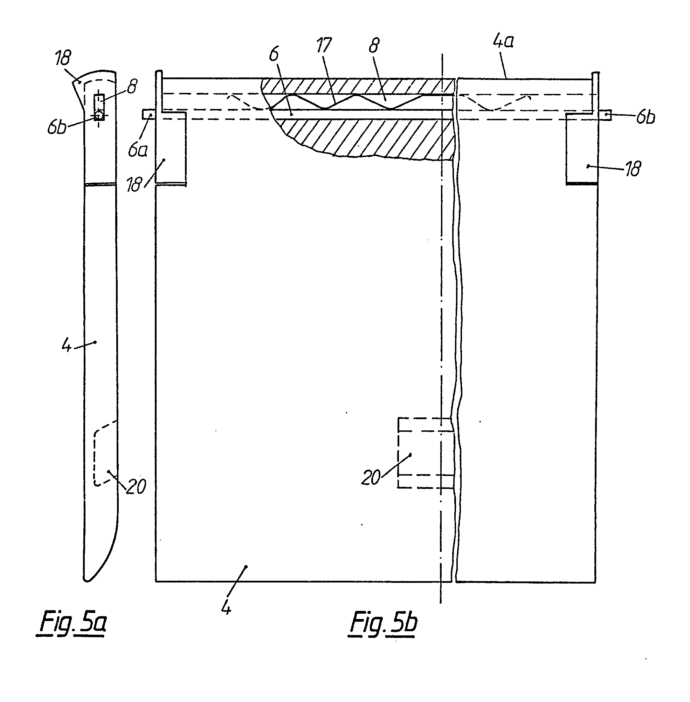

Die Durchgangsbohrung 8 weist eine längliche Querschnittsform auf und ist mit dieser Querschnittsform in Längsrichtung der Tischplatte 4 ausgerichtet (Fig. 5a, b). Eine in der Durchgangsbohrung 8 angeordnete Blattfeder 17 drückt den formstabilen Stab 6 an die Wandung der Durchgangsbohrung 8, die von der vorderen Kante 4a der Tischplatte 4 entfernt liegt. Durch diese Anordnung ist der formstabile Stab 6 und seine als Führungselemente 6a, b dienenden Enden relativ zur Tischplatte in deren Längsrichtung verschiebbar gegen die Kraft der Blattfeder 17.

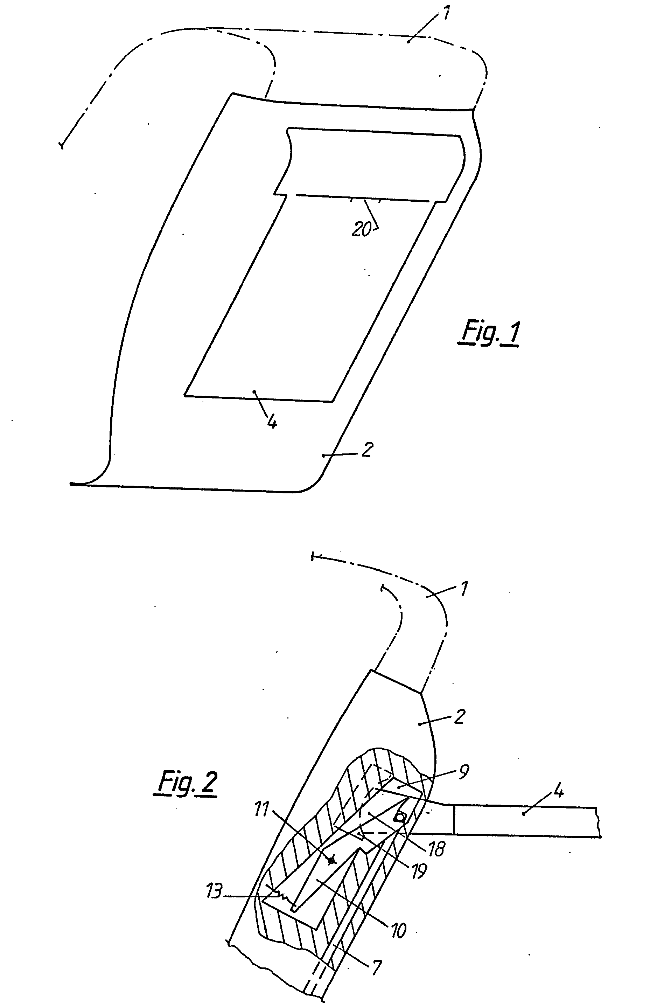

An ihren Längsseiten und im Bereich der vorderen Kante 4a trägt die Tischplatte 4 je ein Zahnsegment 18, die mit einem U-förmigen Befestigungsabschnitt die Tischplatte 4 umgreifen und dort mit ihr befestigt sind. Die Befestigung kann mit Schrauben oder in sonstiger Weise vorgenommen werden. Ausserdem weisen die Zahnsegmente Durchbrüche auf für den Durchtritt der Führungselemente 6a, b. Die Zähne der Zahnsegmente 18 stehen über die vordere Kante 4a hinaus und greifen in die Zähne entsprechender Zahnsegmente 19 (Fig. 2), die in der Blende 2 festgelegt sind. Die Zahnsegmente 19 sind dabei in unmittelbarer Nachbarschaft der Sperrklinken 10 angeordnet.

Will der Fahrgast die Tischplatte 4 in ihre Gebrauchslage schwenken, zieht er sie zunächst aus ihrer in Fig. 1 dargestellten Ruhelage an einer Griffmulde 20 nach oben und klappt sie dann, in dem er sie gleichzeitig zu sich herzieht, in die gewünschte Lage. Danach lässt er die Tischplatte los. Die Blattfeder 17 drückt sie nun nach vorn bis die Zahnsegmente 18, 19 ineinander greifen.

Die Zahnform der Zahnsegmente 18, 19 ist dabei so gewählt, dass ein ungewolltes Weiterrasten vermieden wird bei einer Belastung der Tischplatte. Möchte der Fahrgast die Neigung der Tischplatte 4 verstellen, zieht er sie lediglich zu sich her, schwenkt sie in die gewünschte Lage und lässt sie wieder los.

Beim Verstauen der Tischplatte 4 erfolgt die Handhabung umgekehrt. Der Fahrgast zieht die Tischplatte 4 zu sich her, klappt sie nach oben und lässt sie hinuntergleiten in ihre Ruhelage.

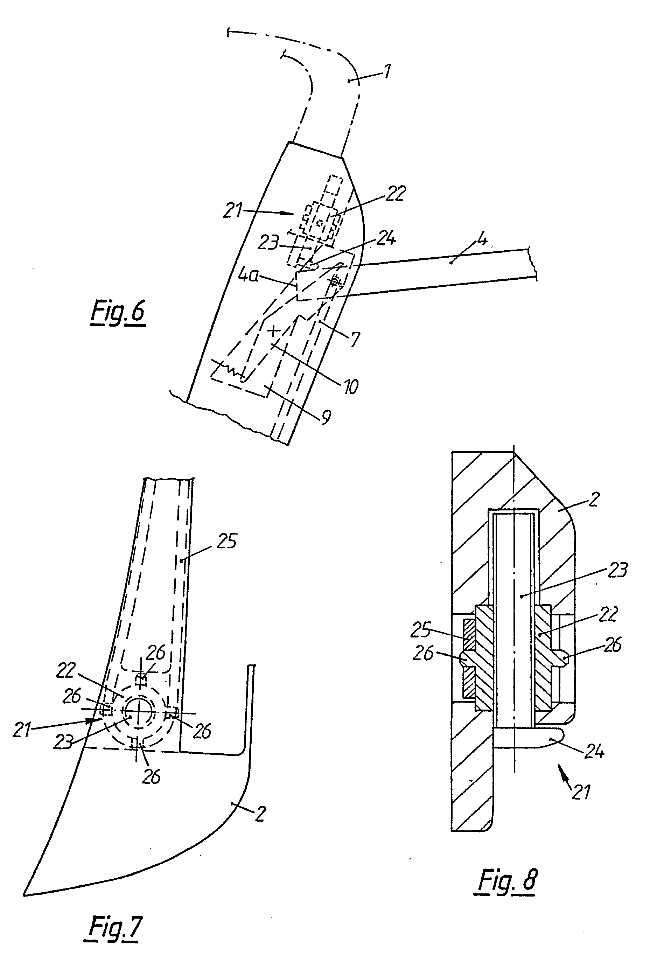

In den Figuren 6-8 ist ein zweites Ausführungsbeispiel dargestellt. Hier sind in der Blende 2 oberhalb ihrer Öffnung 3 zwei Stellschrauben 21 angeordnet (in der Zeichnung ist aus Symmetriegründen nur eine Stellschraube dargestellt), an denen die umgeklappte Tischplatte mit ihren Ecken im Bereich der vorderen Kante anliegt. Die Stellschrauben 21 bestehen aus einer Mutter 22 und einem Gewindebolzen 23, der mit einer Auflagefläche 24 auf die Tischplatte 4 drückt. Die Mutter 22 ist in der Blende 2 drehbeweglich, ansonsten in ihrer Lage unverrückbar festgelegt. Der Gewindebolzen 23 lässt sich durch Drehen der Mutter 22 in axialer Richtung verstellen. In Fig. 7 — sie zeigt nur die Blende 2, ohne Tischplatte 4 und Rückenlehne 1 — ist ein Transmissionsband 25 erkennbar, das um die Muttern 22 geschlungen ist. Das Transmissionsband 25 dient zur gleichzeitigen Betätigung der beiden Muttern 22. Es ist für diesen Zweck als Lochband ausgeführt, in deren Löcher Zapfen 26 der Muttern 22 eingreifen. Die Zapfen 23 stehen in gleichmässigen Abständen am Umfang jeder Mutter 22 radial ab. Ihre Abstände zueinander entsprechen der Lochfolge des Transmissionsbandes 25.

Will der Fahrgast die umgeklappte Tischplatte 4 in ihrer Neigung verstellen, bewegt er das Transmissionsband je nachdem nach links oder rechts. Dadurch drehen sich die Muttern 22 und die Gewindebolzen 23 verschieben sich axial. Da die Gewindebolzen 23 mit ihren Auflageflächen 24 auf die Tischplatte 4 wirken, schwenkt sie in die gewünschte Lage. Für die Betätigung des Transmissionsbandes 25 kann in der Blende 2 eine Öffnung vorgesehen sein, durch die das Band direkt mit der Hand bewegt werden kann. Zweckmässiger ist aber ein Stellorgan, das auf das Transmissionsband wirkt.

Es ist ohne weiteres denkbar, dass die Tischplatte 4 ohne Blende direkt an der Rückenlehne angeordnet ist. In diesem Fall aber müsste die Rückenlehne entsprechend konstruktiv ausgestaltet sein.

**Patentansprüche**

1. Einrichtung zur schwenkbaren Anordnung einer Tischplatte (4) an der mit einer Öffnung (3) für die Tischplatte versehenen Rückenlehne (1) eines Fahrgastsitzes, insbesondere eines Kraftfahrzeugsitzes, bei der die Tischplatte im Bereich ihrer vorderen Kante (4a) mit Führungselementen (6a, b) in zwei beidseitig der Öffnung angebrachten und in vertikaler Richtung sich erstreckenden Längsnuten (7) geführt und durch Hochziehen und Umklappen in eine horizontale Gebrauchslage schwenkbar ist, und bei der zwischen der Rückenlehne (1) und der Tischplatte (4) wirksame Verstellmittel zum Einstellen der Neigung der in die Gebrauchslage geklappten Tischplatte vorgesehen sind, dadurch gekennzeichnet, dass am oberen Ende wenigstens einer Längsnut (7) eine federbelastende Sperrklinke (10) vorgesehen ist, in die das entsprechende Führungselement (6a; b) beim Umklappen der Tischplatte (4) einrastet und dass an der vorderen Kante (4a) der Tischplatte (4) wenigstens ein Zahnsegment (18) befestigt ist, das bei umgeklappter Tischplatte (4) in ein entsprechendes, in der Rückseite der Rückenlehne (1) festgelegtes Zahnsegment (19) eingreift, wobei die Führungselemente (6a, b) relativ zur Tischplatte (4) in deren Längsrichtung gegen Federkraft (17) verschiebbar sind.

2. Einrichtung nach Anspruch 1, dadurch gekennzeichnet, dass wenigstens eine der Längsnuten (7) in ihrem oberen Teil in eine Tasche (9) für die Aufnahme der Sperrklinke (10) übergeht.

3. Einrichtung nach Anspruch 2, dadurch gekennzeichnet, dass die Sperrklinke (10) als Doppelarmhebel ausgelegt und mit ihrem Mittelabschnitt (11) drehbar in der Tasche (9) gelagert ist, dass der erste Hebelarm an seinem Ende einen maulförmigen Einschnitt (12) für das Führungselement (6a, b) der Tischplatte (4) ausbildet und dass die Sperrklinke (10) über eine am Ende ihres zweiten Hebelarms angreifenden Feder (13) vorgespannt ist.

4. Einrichtung nach Anspruch 3, dadurch gekennzeichnet, dass die Sperrklinke (10) am Ende ihres ersten Hebelarms eine in Richtung der Tischplatte (4) abgebogene Lasche (16) aufweist.

5. Einrichtung nach einem oder mehreren der Ansprüche 2-4, dadurch gekennzeichnet, dass in der Tasche (9) als Anschlag dienender Vorsprung (14) ausgebildet und in der Sperrklinke (10) eine hierfür entsprechende Innenschulter (15) vorgesehen ist.

6. Einrichtung nach einem oder mehreren der Ansprüche 1-5, dadurch gekennzeichnet, dass die Zahnsegmente (19) in unmittelbarer Nachbarschaft der Sperrklinke (10) angeordnet sind.

7. Einrichtung nach einem oder mehreren der Ansprüche 1-6, dadurch gekennzeichnet, dass die Tischplatte (4) mit einer parallel zu ihrer vorderen Kante (4a) verlaufenden, länglichen Durchgangsbohrung (8) versehen ist, in der ein formstabiler Stab (6) so angeordnet ist, dass er an beiden Seiten aus der Tischplatte (4) ragt und mit seinen überstehenden Enden die Führungselemente (6a, b) bildet.

8. Einrichtung nach Anspruch 7, dadurch gekennzeichnet, dass der Stab (6) mit einer in der Durchgangsbohrung (8) eingelegten Feder (17) beaufschlagt ist.

9. Einrichtung zur schwenkbaren Anordnung einer Tischplatte (4) an der mit einer Öffnung (3) für die Tischplatte versehenen Rückenlehne (1) eines Fahrgastsitzes, insbesondere eines Kraftfahrzeugsitzes, bei der die Tischplatte im Bereich ihrer vorderen Kante (4a) mit Führungselementen (6a, b) in zwei beidseitig der Öffnung angebrachten und in vertikaler Richtung sich erstreckenden Längsnuten (7) geführt und durch Hochziehen und Umklappen in eine horizontale Gebrauchslage schwenkbar ist, und bei der zwischen der Rückenlehne (1) und der Tischplatte (4) wirksame Verstellmittel zum Einstellen der Neigung der in die Gebrauchslage geklappten Tischplatte vorgesehen sind, dadurch gekennzeichnet, dass am oberen Ende wenigstens einer Längsnut (7) eine federbelastende Sperrklinke (10) vorgesehen ist, in die das entsprechende Führungselement (6a, b) beim Umklappen der Tischplatte (4) einrastet und dass wenigstens eine in der Rückseite der Rückenlehne (1) festgelegte Stellschraube (21) vorgesehen ist, an der die umgeklappte Tischplatte (4) im Bereich ihrer vorderen Kante (4a) anliegt.

10. Einrichtung nach Anspruch 9, dadurch gekennzeichnet, dass die Stellschraube (21) aus einer Mutter (22) und einem Gewindebolzen (23) gebildet ist, wobei die Mutter (22) drehbeweglich, ansonsten in ihrer Lage unverrückbar festgelegt ist und der Gewindebolzen (23) mit einer Auflagefläche (24) auf die umgeklappte Tischplatte (4) drückt.

11. Einrichtung nach Anspruch 10, dadurch gekennzeichnet, dass zwei Stellschrauben (21) vorgesehen sind, deren Muttern (22) über ein Transmissionsband (25) miteinander verbunden sind.

12. Einrichtung nach Anspruch 11, dadurch gekennzeichnet, dass jede Mutter (22) an ihrem Umfang in gleichmässigen Abständen radial abstehende Zapfen (26) aufweist und dass das Transmissionsband (25) als Lochband ausgeführt ist, dessen Lochfolge dem Abstand der Zapfen (26) entspricht.

13. Einrichtung nach einem oder mehreren der Ansprüche 1-12, dadurch gekennzeichnet, dass die Rückseite der Rückenlehne (1) von einer an der Rückenlehne (1) befestigten, formstabilen Blende (2) gebildet ist, in der die Tischplatte (4) sitzt.

**Revendications**

1. Dispositif pour installer d'une façon réglable une tablette (4) sur le dossier (1), muni d'une ouverture (3) pour cette tablette, d'un siège de passager notamment d'un siège d'avion, dispositif dans lequel la tablette est guidée au voisinage de son bord antérieur (4a) par des éléments de guidage (6a, 6b) dans deux rainures longitudinales (7) ménagées des deux côtés de cette ouverture et s'étendant en direction verticale, la tablette étant susceptible d'être basculée dans une position horizontale d'utilisation, en la tirant vers le haut et en la rabattant, tandis qu'il est prévu, pour régler l'inclinaison de la tablette ainsi rabattue dans la position d'utilisation, des moyens de réglage agissant entre le dossier (1) et la tablette (4), dispositif caractérisé en ce que, à l'extrémité supérieure d'au moins une rainure longitudinale (7) il est prévu un cliquet d'arrêt (10) sollicité par un ressort, et dans lequel l'élément de guidage correspondant (6a, 6b) vient s'enclencher lors du rabattement de la tablette (4), et qu'au bord antérieur (4a) de la tablette (4) est fixé un segment denté (18) qui, lorsque la tablette (4) est rabattue, vient en prise dans un segment denté (19) correspondant fixé sur le côté arrière du dossier (1), les éléments de guidage (6a, 6b) étant susceptibles de se déplacer contre l'action d'un ressort (17) relativement à la tablette (4) dans la direction longitudinale de celle-ci.

2. Dispositif selon la revendication 1, caractérisé en ce qu'au moins une des rainures longitudinales (7) se prolonge à sa partie supérieure par une poche (9) destinée à recevoir le cliquet d'arrêt (10).

3. Dispositif selon la revendication 3, caractérisé en ce que le cliquet d'arrêt (10) revêt la forme d'un levier à deux bras et est monté par sa partie médiane (11) dans la poche (9) en étant susceptible de pivoter, tandis que le premier bras de levier forme à son extrémité une encoche en forme de mâchoire (12) pour l'élément de guidage (6a, 6b) de la tablette (4) et que le cliquet d'arrêt (10) est précontraint par l'intermédiaire d'un ressort (13) agissant à l'extrémité de son second bras de levier.

4. Dispositif selon la revendication 3, caractérisé en ce que le cliquet d'arrêt (10) comporte à l'extrémité de son premier bras de levier, une languette (16) repliée en direction de la tablette (4).

5. Dispositif selon une ou plusieurs des revendications 2 à 4, caractérisé en ce quil est prévu dans la poche (9) une saillie (14) jouant le rôle de butée, et sur le cliquet d'arrêt (10) un épaulement interne (15) correspondant à cette saillie.

6. Dispositif selon une ou plusieurs des revendications 1 à 5, caractérisé en ce que les segments dentés (19) sont disposés à proximité immédiate du cliquet d'arrêt (10).

7. Dispositif selon une ou plusieurs des revendications 1 à 6, caractérisé en ce que la tablette (4) est munie d'un perçage traversant (8) s'étendant parallèlement à son bord antérieur (4a), et dans lequel est disposé un barreau (6) de forme stable de sorte qu'il fasse saillie sur les deux côtés de la tablette (4) et constitue avec ses extrémités faisant saillie, les éléments de guidage (6a, 6b).

8. Dispositif selon la revendication 7, caractérisé en ce que le barreau (6) est sollicité par un ressort (17) placé dans le perçage traversant (8).

9. Dispositif pour installer d'une façon réglable une tablette (4) sur le dossier (1), muni d'une ouverture (3) pour cette tablette, d'un siège de passager, notamment d'un siège d'avion, dispositif dans lequel la tablette est guidée au voisinage de son bord antérieur (4a) par des éléments de guidage (6a, 6b) dans deux rainures longitudinales (7) ménagées des deux côtés de cette ouverture et s'étendant en direction verticale, la tablette étant susceptible dêtre basculée dans une position horizontale d'utilisation, en la tirant vers le haut et en la rabattant, tandis qu'il est prévu, pour régler l'inclinaison de la tablette ainsi rabattue dans la position d'utilisation, des moyens de réglage agissant entre le dossier (1) et la tablette (4), dispositif caractérisé en ce que, à l'extrémité supérieure d'au moins une rainure longitudinale (7) il est prévu un cliquet d'arrêt (10) sollicité par un ressort, et dans lequel vient s'enclancher l'élément de guidage correspondant (6a, 6b) lors du rabattement de la tablette (4), tandis qu'il est prévu au moins une vis de réglage (11) fixée sur le côté arrière du dossier (1), sur laquelle s'applique, au voisinage de son bord antérieur (4a), la tablette (4) ainsi rabattue.

10. Dispositif selon la revendication 9, caractérisé en ce que la vis de réglage (21), est constituée d'un écrou (22) et d'un axe fileté (23), l'écrou (22) étant fixé en position en étant mobile en rotation mais par ailleurs de façon immuable, tandis que l'axe fileté (3) s'applique par une surface d'appui (24) sur la tablette (4) rabattue.

11. Dispositif selon la revendication 10, caractérisé en ce qu'il est prévu deux vis de réglage (21) dont les écrous (22) sont reliés ensemble par l'intermédiaire d'une bande de transmission (25).

12. Dispositif selon la revendication 11, caractérisé en ce que chaque écrou (22) comporte à sa périphérie, à des intervalles réguliers, des tétons (26) faisant saillie radialement, tandis que la bande de transmission (25) est une bande perforée dont l'intervalle des trous correspond à l'intervalle des tétons (26).

13. Dispositif selon une ou plusieurs des revendications 1 à 12, caractérisé en ce que le côté arrière du dossier (1) est constitué par un panneau (2) de forme stable, fixé au dossier (1), et dans lequel est placée la tablette (4).

## Claims

1. A device for swingably mounting a table plate (4) on the back rest of a passenger seat, in particular an automobile seat, which back rest is provided with an opening (3) for the table plate, in which device the table plate is guided in the zone of its front edge (4a) by guide elements (6a, b) in two longitudinal grooves (7), provided one at each side of the opening and extending in the vertical direction, and can be swung into a horizontal operative position by being lifted and turned, the device being provided with adjustment means, effective between the back rest (1) and the table plate (4), for setting the slope of the table plate swung into the operative position, characterized in that, at the upper end of at least one of the longitudinal grooves (7), a spring-loaded pawl (10) is provided in which the corresponding guide elements (6a, b) engage when the table plate (4) is turned, and in that at least one tooth segment (18) is secured to the front edge (4a) of the table plate (4), which tooth segment engages, when the table plate (4) is turned, in a corresponding tooth segment (19) secured in the rear face of the back rest (1), the guide elements (6a, b) being displaceable relatively to the table plate (4) in the longitudinal direction thereof and against the force of a spring (17).

2. A device according to claim 1, characterized in that at least one of the longitudinal grooves (7) changes, in its upper portion, into the form of a pocket (9) for receiving the pawl (10).

3. A device according to claim 2, characterized in that the pawl (10) is designed as a double-armed lever and is rotatably mounted in the pocket (9) by its median portion (11), in that the first lever arm forms, at its end, a jaw-like incision for receiving the guide element (6a, b) of the table plate (4), and in that the pawl (10) is biassed by a spring (13) engaging the end of its second lever arm.

4. A device according to claim 3, characterized in that the pawl (10) has, at the end of its first lever arm, a limb (16) bent in the direction of the table plate (4).

5. A device according to any one or more of claims 2 - 4, characterized in that a projection (14) serving as an abutment is formed in the pocket (9) and an inner shoulder (15), complementary thereto, is provided in the pawl (10).

6. A device according to any one or more of claims 1 - 5, characterized in that the tooth segments (19) are arranged in the immadiate vicinity of the pawl (10).

7. A device according to any one or more of claims 1 - 6, characterized in that the table plate (4) is provided with an elongate hole (8) which extends therethrough and parallel to its front edge (4a), in which hole a stable rod (6) is so arranged that it projects from the table plate (4) at both sides and its projecting ends form the guide elements (6a, b).

8. A device according to claim 7, characterized in that the rod (6) is loaded by a spring (17) inserted in the hole (8).

9. A device for swingably mounting a table plate (4) on the back rest of a passenger seat, in particular an automobile seat, which back rest is provided with an opening (3) for the table plate, in which device the table plate is guided in the zone of its front edge (4a) by guide elements (6a, b) in two longitudinal grooves (7), provided one at each side of the opening and extending in the vertical direction, and can be swung into a horizontal operative position by being lifted and turned, the device being provided with adjustment means, effective between the back rest (1) and the table plate (4), for setting the slope of the table plate swung into the operative position, characterized in that a spring-loaded pawl (10), in which the corresponding guide element (6a, b) engages when the table plate (4) is turned, is provided at the upper end of at least one longitudinal groove (7), and in that at least one adjusting screw (21) is secured in the rear face of the back rest (1), the turned table plate (4) bearing at its front edge (4a) against said adjusting screw.

10. A device according to claim 9, characterized in that the adjusting screw (21) consists of a nut (22) and a threaded bolt (23), the nut (22) being rotatable but normally immobilized, and the threaded bolt (23) pressing by its bearing face (24) on the turned table plate (4).

11. A device according to claim 10, characterized in that two adjusting screws (21) are provided, the associated nuts (22) being interconnected by a transmission strip (25).

12. A device according to claim 11, characterized in that each nut (22) has radially projecting lugs (26) disposed equidistantly on its periphery, and in that the transmission strip (25) is formed as a perforated strip, whose sequence of perforations corresponds to the spacing of the lugs (26).

13. A device according to any one or more of claims 1 - 12, characterized in that the rear face of the back rest (1) is formed by a stable cover (2) which is secured to the back rest (1) and in which the table plate (4) fits.

_Fig. 1_

_Fig. 2_

_Fig. 3a_

_Fig. 3b_

_Fig. 3c_

_Fig. 4a_

_Fig. 4b_

Fig. 5a

Fig. 5b

Fig.6

Fig.7

Fig. 8